# FASCICULE DE BREVET EUROPEEN

(11) **EP 2 112 299 B1**
(45) Date de publication et mention de la délivrance du brevet: **30.11.2011**
(21) Numéro de dépôt: 09290226.1
(22) Date de dépôt: 30.03.2009
(51) Int. Cl.: E04H 5/06, B66F 7/00, B62D 65/18

(54) **Procédé de montage d'un véhicule et équipement permettant la mise en oeuvre de ce procédé**
Montageverfahren eines Fahrzeugs und Ausrüstung zur Durchführung dieses Verfahrens
Method of assembling a vehicle and equipment for the implementation thereof

(30) Priorité: 23.04.2008 FR 0802279
(43) Date de publication de la demande: 28.10.2009
(73) Titulaire: NEXTER Systems, 42328 Roanne Cedex (FR)
(72) Inventeur: Charlier-Nexter, Dominique, 18023 Bourges Cedex (FR); Laurent-Nexter, Henri, 18023 Bourges Cedex (FR); Viganne-Nexter, Stéphane, 18023 Bourges Cedex (FR); Valette-Nexter, Guillaume, 18023 Bourges Cedex (FR)
(74) Mandataire: Célanie, Christian

(56) Documents cités:
- WO-A-02/051695
- WO-A-2006/128241
- US-A- 4 645 412

## Description

Le domaine technique de l'invention est celui des procédés de montage de véhicules et en particulier des procédés de montage de véhicules de dimensions importantes tels que les véhicules blindés.

Il est connu de réaliser les montages de véhicules, en particulier les automobiles, en mettant en place une chaîne de montage formée de plusieurs postes d'assemblage successifs. Les chaînes de montage connues comprennent une voie de circulation pour les véhicules de part et d'autre de laquelle sont disposés des outillages plus ou moins automatisés (robots de soudage, portiques de manutention...).

Les chaînes connues sont bien adaptées au montage en grande série de véhicules légers mais elles ne sont pas adaptées au montage de véhicules de dimensions importantes et en particulier de véhicules blindés.

La particularité de ces véhicules est d'avoir des dimensions souvent importantes (hauteur supérieure à 2 mètres) ainsi qu'une masse très importante supérieure à 5 tonnes.

Par ailleurs ces véhicules demandent des opérations de montage de nombreux équipements, parfois lourds, et positionnés à des hauteurs différentes.

La solution classique qui est mise en oeuvre dans les ateliers est la mise en place autour du véhicule de passerelles démontables. Ces passerelles permettent d'accéder aux parties hautes et elles comportent des escaliers d'accès.

Outre leur délai de mise en place, ces passerelles présentent l'inconvénient d'engendrer une différence de niveau entre le stockage des pièces et la zone de montage.

Par ailleurs les risques sont accrus car les opérateurs travaillent en hauteur et ont à réaliser de nombreux aller et retour sur les escaliers en portant parfois des charges importantes.

On connaît également le brevet US-4645412 décrivant un procédé et un dispositif de montage d'un véhicule de hauteur importante selon le préambule des revendications 1 et 5, et selon lequel on utilise une fosse recevant le véhicule.

L'invention a pour but de proposer un procédé ainsi qu'un équipement de montage permettant de faciliter et sécuriser les opérations d'assemblage d'un véhicule de grandes dimensions et en particulier d'un véhicule blindé.

Ainsi l'invention a pour objet un procédé de montage d'un véhicule ayant une hauteur importante, procédé dans lequel on met en oeuvre au moins une fosse pouvant recevoir le véhicule, ce dernier étant positionné sur au moins un plancher amovible permettant de surélever le véhicule par rapport au fond de la fosse, le plancher étant positionné à une hauteur souhaitée à l'aide de moyens de positionnement.

Le véhicule pourra être mis en place dans la fosse et sur ses planchers à l'aide de moyens de levage.

Selon une variante de ce procédé, on pourra prévoir au moins une opération de montage réalisée sur un véhicule disposé à l'envers dans une fosse.

Selon une variante, le véhicule pourra progresser dans la fosse ou sur son plancher à l'aide de ses propres moyens de mobilité, au moins une rampe étant prévue pour permettre la sortie du véhicule hors de la fosse.

L'invention a également pour objet un équipement de montage d'un véhicule mettant en oeuvre un tel procédé, équipement comprenant au moins une fosse pouvant recevoir le véhicule, fosse à l'intérieur de laquelle est mis en place au moins un plancher permettant de surélever le véhicule par rapport au fond de la fosse, le plancher étant amovible et positionné à une hauteur souhaitée à l'aide de moyens de positionnement.

L'équipement de montage pourra comprendre au moins deux planchers distincts, chaque plancher étant mis en place de façon à recevoir une partie des moyens de mobilité du véhicule.

La fosse pourra avoir une longueur telle qu'elle ne pourra recevoir qu'un seul véhicule.

La fosse pourra avoir une longueur telle qu'elle pourra recevoir plusieurs véhicules, et constituera ainsi un chemin dans lequel pourront circuler le ou les véhicules, au moins une rampe étant prévue pour permettre au(x) véhicule(s) de sortir de la fosse.

L'équipement de montage pourra par ailleurs comporter des panneaux positionnables en avant et/ou en arrière du véhicule, panneaux obturant partiellement la fosse.

L'équipement de montage pourra comprendre également des volets latéraux permettant de fermer les intervalles séparant le véhicule des rebords latéraux de la fosse.

Dans ce cas avantageusement, chaque volet latéral pourra comporter une lame pivotante solidaire d'une lame horizontale fixe, lame pivotante pouvant venir en appui contre le véhicule.

L'invention sera mieux comprise à la lecture de la description qui va suivre de modes particuliers de réalisation, description faite en référence aux dessins annexés et dans lesquels :
- la figure 1 montre schématiquement en coupe transversale un équipement de montage selon l'invention, équipement dans lequel est positionné un premier type de véhicule,
- la figure 2 est une vue en coupe longitudinale du même équipement,
- la figure 3a montre en coupe une installation de montage mettant en oeuvre un premier mode de réalisation de l'équipement selon l'invention,
- la figure 3b est une vue de dessus de l'installation selon la figure 3a,
- les figures 4a, 4b et 4c montrent une installation de montage mettant en oeuvre un second mode de réalisation de l'équipement selon l'invention, la figure 4a étant une vue en coupe d'une première extrémité de l'installation, la figure 4b étant une vue de dessus de cette installation et la figure 4c étant une vue en coupe d'une deuxième extrémité de l'installation,
- la figure 5 est une vue analogue à la figure 1 mais dans laquelle un second type de véhicule est positionné dans l'équipement,
- la figure 6 est une vue montrant la mise en oeuvre de l'équipement selon l'invention pour le montage d'un véhicule positionné à l'envers,
- la figure 7 est une vue montrant une variante de réalisation des moyens de positionnement du véhicule.

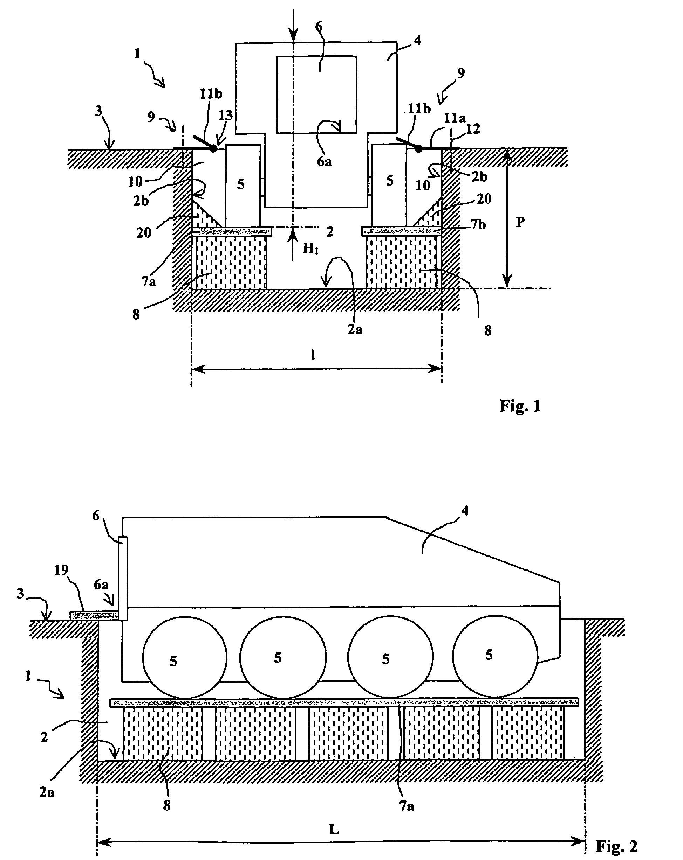

En se reportant aux figures 1 et 2, un équipement de montage 1 selon l'invention comprend une fosse 2 maçonnée qui est aménagée dans le sol 3 d'un atelier. Cette fosse est rectangulaire, elle a une profondeur P, une longueur L et une largeur 1.

La fosse 2 est destinée à recevoir un véhicule 4, ici un véhicule blindé d'infanterie comportant quatre paires de roues 5. Un tel véhicule a une hauteur H₁ particulièrement importante (supérieure à 2 mètres). Il comporte à sa partie arrière une porte 6 donnant accès à l'habitacle.

Afin de faciliter les différentes opérations de montage il est nécessaire de positionner la porte 6 avec son bord inférieur 6a sensiblement en regard du sol 3 de l'atelier.

Ainsi les opérateurs pourront facilement entrer et sortir dans le véhicule 4 directement à partir du sol 3 sans qu'il soit nécessaire de positionner une passerelle ou un escalier.

Pour cela l'équipement selon l'invention comporte au moins un plancher 7 qui permet de surélever le véhicule 4 par rapport au fond 2a de la fosse 2.

Ici deux planchers sont prévus (7a et 7b), un pour chaque rangée de roues 5.

Ces planchers 7a,7b sont positionnés à la hauteur souhaitée à l'aide de moyens de positionnement 8 qui sont constitués par des cales, réalisées par exemple en bois. Des coins latéraux 20 permettent de guider et centrer la caisse du véhicule lors de sa mise en place dans la fosse 2 à l'aide d'un moyen de levage. Ces coins sont réalisés par exemple en bois.

Le plancher 7a, 7b est bien entendu démontable et amovible et les cales 8 peuvent être remplacées par des cales de dimensions différentes pour positionner notamment le véhicule 4 à une hauteur différente par rapport au sol 3 ou bien encore pour adapter l'équipement 1 à un autre véhicule de dimensions différentes.

Comme cela est plus particulièrement visible sur la figure 1, l'équipement 1 comporte des volets latéraux 9 qui permettent de fermer les intervalles 10 séparant le véhicule des rebords latéraux 2b de la fosse 2.

Chaque volet latéral 9 comporte une lame horizontale fixe 11a qui est rendue solidaire du sol 3 de l'atelier par un moyen de fixation (par exemple des vis dont seul un axe 12 est représenté à la figure 1).

Le volet latéral 9 comporte aussi une lame pivotante 11b qui est rendue solidaire de la lame fixe 11a par une charnière 13. Les lames 11a, 11b sont par exemple réalisées en métal.

La lame pivotante 11b peut venir en appui contre le véhicule 4 (ici au niveau des roues 5).

En obturant les intervalles 10, les volets 9 permettent de sécuriser les opérations autour du véhicule 4. Ils empêchent les opérateurs de glisser leur pied dans l'intervalle 10 et ils empêchent aussi la chute d'outils au fond de la fosse 2.

La présence de la lame pivotante 11b permet par ailleurs d'adapter les volets 9 à différentes largeurs de véhicules.

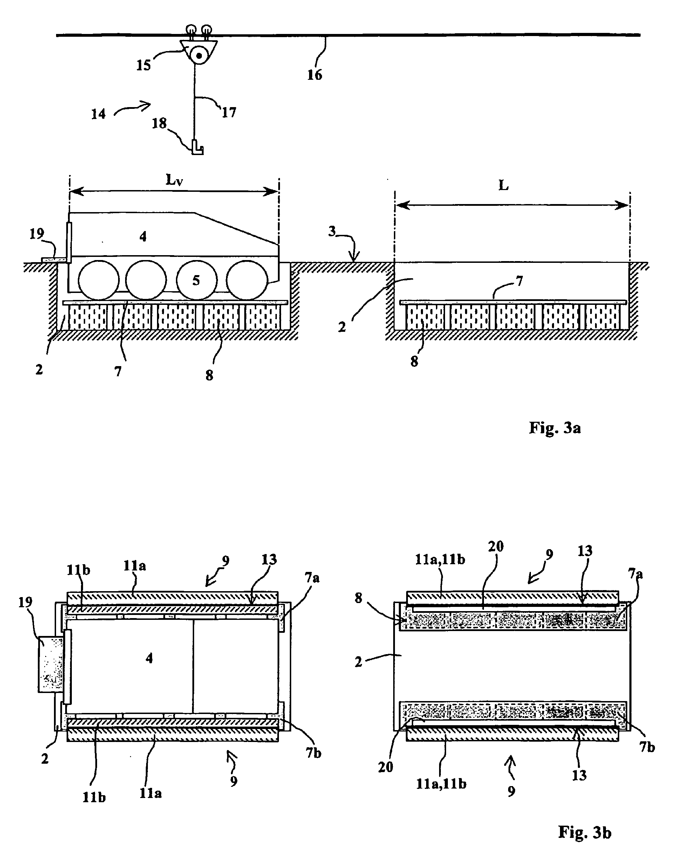

Les figures 3a et 3b montrent une installation de montage mettant en oeuvre un premier mode de réalisation de l'équipement selon l'invention.

Suivant ce mode l'atelier comporte plusieurs fosses 2 dont les longueurs L sont supérieures à la longueur totale Lv du véhicule 4 mais chaque fosse 2 ne peut recevoir qu'un seul véhicule. On choisira bien entendu comme longueur L une dimension qui sera supérieure à la plus grande longueur des véhicules dont le montage sera réalisable dans cet atelier.

On n'a représenté ici que deux fosses 2 mais l'atelier pourra bien entendu comporter un nombre de fosses supérieur pour accroître ses capacités de montage.

Suivant ce mode de réalisation du procédé de montage, un véhicule 4 est mis en place dans la fosse 2 sur ses planchers 7a, 7b à l'aide de moyens de levage 14 comprenant par exemple un palan ou pont roulant 15 déplaçable sur des rails 16 voisins du plafond de l'atelier. Le palan 15 déroule un câble 17 auquel est fixé un crochet 18. Des élingues non représentées seront fixées au véhicule 4 pour permettre son emport par le palan 15.

L'avantage de ce mode de réalisation est que les différentes fosses 2 sont séparées par des portions du sol 3 qui peut voir circuler en toute sécurité les différents moyens de transport des pièces (chariots motorisés).

Un moyen d'accès 19 sera fixé (ou posé) au sol 3 à l'arrière du véhicule 4 pour faciliter l'entrée dans ce dernier et couvrir l'espace entre fosse 2 et véhicule 4.

La figure 3b permet de visualiser en vue de dessus les volets latéraux 9. Sur la partie de gauche de cette figure, un véhicule 4 est positionné sur les planchers 7a,7b. Les lames pivotantes 11b des volets 9 sont appliquées contre les roues du véhicule et assurent la fermeture des intervalles latéraux.

Sur la partie de droite de cette figure 3b, la fosse 2 est dépourvue de véhicule. Les volets 9 sont en position repliée, les lames pivotantes 11b appliquées sur les lames fixes 11a. Il est alors possible d'introduire un véhicule dans la fosse sans être gêné par les volets 9.

On voit également sur cette partie de la figure les planchers 7a et 7b, ainsi qu'en transparence leurs cales de positionnement 8.

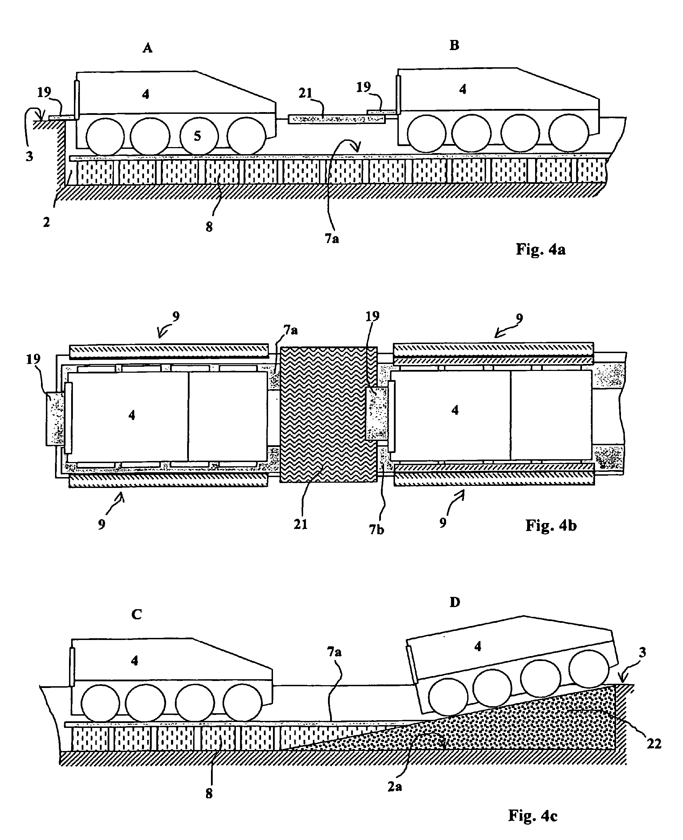

Les figures 4a, 4b et 4c montrent une installation de montage mettant en oeuvre un second mode de réalisation de l'équipement selon l'invention. Suivant ce mode l'atelier comporte au moins une fosse 2 dont la longueur L est bien supérieure à la longueur totale Lv du véhicule 4.

Cette fosse peut ainsi recevoir plusieurs véhicules. On peut donc délimiter dans l'atelier plusieurs postes de travail A, B, C... Chaque poste pourra être dédié à certains montages. Les véhicules passeront d'un poste de montage à l'autre en roulant sur les planchers 7a,7b.

La fosse 2 constitue ainsi un chemin dans lequel peuvent circuler les véhicules 4.

Afin de permettre les différents montages au niveau de chaque poste de travail on positionnera entre les différents véhicules 4 des panneaux 21 qui obtureront partiellement la fosse 2. Ces panneaux seront réalisés en tôles à haute résistance mécanique pour permettre le passage des engins de manutention. Ils seront retirés à l'aide d'un palan avant chaque déplacement des véhicules 4 puis repositionnés ensuite.

On a représenté aussi sur les figures 4a et 4b les moyens d'accès 19 qui facilitent l'entrée à l'intérieur de chaque véhicule, tant à partir du sol 3 de l'atelier, qu'à partir d'un panneau 21.

Suivant ce mode de réalisation de l'invention on pourra aussi prévoir des moyens permettant aux véhicules de sortir d'eux même par roulage hors de la fosse 2.

La figure 4c montre au niveau du poste D cette sortie d'un véhicule 4. Les moyens permettant la sortie sont constitués par une rampe 22 (ou bien deux rampes, une pour chaque plancher 7a, 7b). La rampe 22 sera avantageusement réalisée en béton et elle sera positionnée au niveau du fond 2a de la fosse 2. En fonction de la hauteur des moyens de positionnement 8, les planchers 7a,7b arriveront plus ou moins haut sur la rampe 22.

A titre de variante on pourra prévoir d'autres rampes intermédiaires (non représentées) qui seront positionnées par exemple entre deux postes successifs. On pourra ainsi avoir éventuellement différentes hauteurs d'intervention sur un même véhicule. Ceci peut être avantageux pour des montages de véhicules particulièrement complexes.

Quel que soit le mode de réalisation mis en oeuvre, un des avantages du procédé et de l'équipement de montage selon l'invention est qu'il permet d'adapter l'atelier au montage d'un véhicule ayant des dimensions différentes.

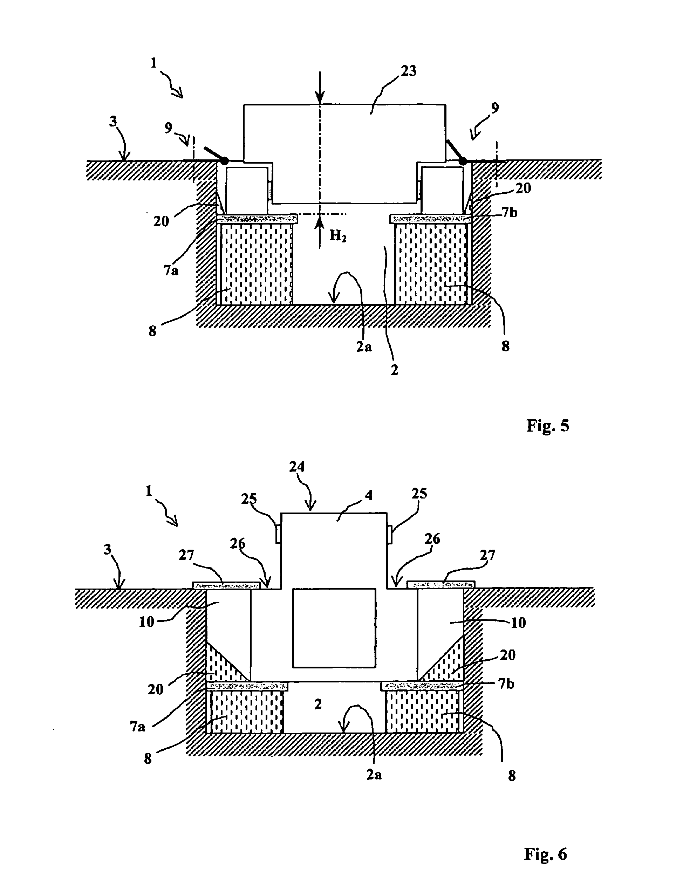

La figure 5 montre ainsi la même fosse 2 à l'intérieur de laquelle on a positionné un véhicule 23 de dimensions différentes. Ce véhicule est ici un véhicule chenillé dont la hauteur H2 est inférieure à la hauteur H1 du véhicule 4 précédemment décrit.

Il est alors nécessaire de positionner le véhicule 23 dans la fosse 2 à une hauteur supérieure. Ce résultat est obtenu en mettant en oeuvre des moyens de positionnement 8 de hauteurs différentes. Les dimensions des coins 20 sont également choisies de façon à être adaptées à ce nouveau type de véhicule.

Les volets latéraux 9 pourront par ailleurs être déplacés ou bien remplacés pour permettre la mise en place d'un véhicule un peu plus large.

On voit donc que le procédé et l'équipement de montage selon l'invention permettent non seulement de faciliter et sécuriser le montage de véhicules lourds et encombrants mais qu'ils permettent une adaptation au montage de différents types de véhicules.

Il suffit en effet de remplacer simplement les cales et éventuellement les planchers pour passer du montage d'un type de véhicule à un autre montage.

Bien entendu la modularité de cet équipement n'est possible que dans une certaine mesure qui est liée aux dimensions choisies pour la fosse (profondeur, largeur et éventuellement longueur).

Mais, avec un choix judicieux des dimensions des fosses, il est possible de réaliser ainsi le montage de grands nombres de véhicules différents.

La figure 6 montre un autre exemple de mise en oeuvre de l'équipement de montage selon l'invention.

Dans le cas de véhicules blindés à roues il est nécessaire de réaliser un certain nombre de montages de composants au niveau d'une face inférieure 24 de la caisse du véhicule 4. On doit ainsi notamment fixer les essieux 25 et les roues (non représentées sur la figure 6).

Il est avantageux pour faciliter ces montages de les réaliser sur la caisse du véhicule 4 disposée à l'envers.

Conformément à l'invention on peut disposer le véhicule 4 à l'envers à l'intérieur de la fosse 2. Les cales 8 seront alors choisies de dimensions telles que les déports 26 du bas de la caisse se situent sensiblement au niveau du sol 3 de l'atelier. Il est alors facile d'accéder à la face inférieure 24 pour réaliser les différents montages.

Pour couvrir les intervalles latéraux 10, on pourra positionner des panneaux 27 en lieu et place des volets 9. Suivant les dimensions du véhicule 4, les volets 9 pourront éventuellement suffire à fermer les intervalles 10.

Bien entendu le véhicule 4 est mis en place ainsi à l'envers dans la fosse puis retiré de cette dernière à l'aide de moyens de levage (palan ou pont roulant). Le véhicule sera ensuite retourné à l'aide des moyens de levage avant d'être mis en place à l'endroit dans une autre fosse pour poursuivre le montage.

Dans toute la description précédente on a considéré que chaque plancher 7a, 7b était un élément individualisé (par exemple en tôle) dont le positionnement vertical était assuré à l'aide de moyens de positionnement 8 tels que des cales en bois. Il est bien entendu possible de réaliser chaque plancher 7a,7b sous la forme de pièces de bois et on pourra ainsi d'une façon très simple réaliser les planchers 7 et les moyens de positionnement 8 sous la forme d'un empilement de planches ou de longerons.

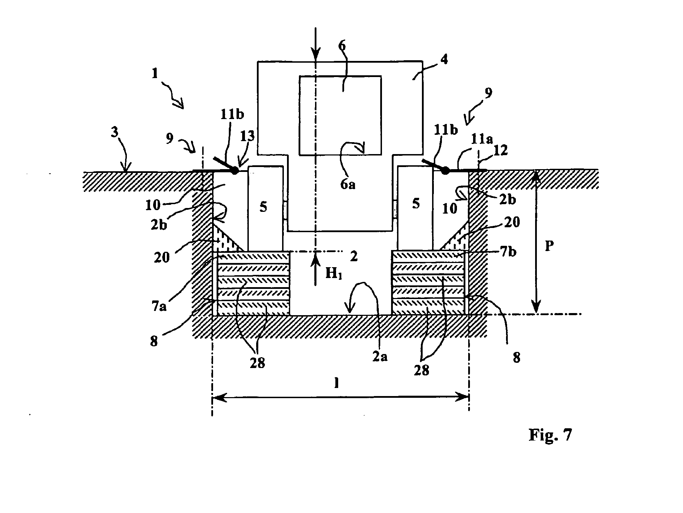

A titre d'exemple la figure 7 est une vue analogue à la figure 1 mais pour laquelle le véhicule 4 est positionné relativement au fond 2a de la fosse 2 à l'aide d'un empilement 8 de planches ou longerons 28 en bois. Les longerons pourront avoir des épaisseurs identiques ou bien différentes, l'essentiel est d'arriver à positionner le véhicule 4 à la hauteur souhaitée. Le longeron 28 du dessus de chaque empilement constitue alors le plancher 7a ou 7b.

## Revendications

1. Procédé de montage d'un véhicule (4) ayant une hauteur importante, procédé dans lequel on met en oeuvre au moins une fosse (2) pouvant recevoir le véhicule (4), **caractérisé en ce que** ce dernier est positionné sur au moins un plancher amovible (7a,7b) permettant de surélever le véhicule (4) par rapport au fond (2a) de la fosse (2), le plancher étant positionné à une hauteur souhaitée à l'aide de moyens de positionnement (8).

2. Procédé de montage selon la revendication 1, **caractérisé en ce que** le véhicule est mis en place dans la fosse et sur ses planchers à l'aide de moyens de levage.

3. Procédé de montage selon la revendication 2, **caractérisé en ce qu'**il comporte au moins une opération de montage réalisée sur un véhicule (4) disposé à l'envers dans une fosse (2).

4. Procédé de montage selon la revendication 1, **caractérisé en ce que** le véhicule (4) peut progresser dans la fosse (2) ou sur son plancher (7a,7b) à l'aide de ses propres moyens de mobilité, au moins une rampe (22) étant prévue pour permettre la sortie du véhicule (4) hors de la fosse (2).

5. Equipement de montage d'un véhicule mettant en oeuvre le procédé selon une des revendications précédentes, équipement comprenant au moins une fosse (2) pouvant recevoir le véhicule (4), **caractérisé en ce que** à l'intérieur de la fosse est mis en place au moins un plancher (7a,7b) permettant de surélever le véhicule par rapport au fond (2a) de la fosse (2), le plancher étant amovible et positionné à une hauteur souhaitée à l'aide de moyens de positionnement (8).

6. Equipement de montage selon la revendication 5, **caractérisé en ce qu'**il comprend au moins deux planchers distincts (7a,7b), chaque plancher étant mis en place de façon à recevoir une partie des moyens de mobilité du véhicule (4).

7. Equipement de montage selon une des revendications 5 ou 6, **caractérisé en ce que** le plancher (7a,7b) et les moyens de positionnement (8) sont constitués par un empilement de longerons (28).

8. Equipement de montage selon une des revendications 5 à 7, **caractérisé en ce que** la fosse (2) a une longueur telle qu'elle ne peut recevoir qu'un seul véhicule (4).

9. Equipement de montage selon une des revendications 5 à 7, **caractérisé en ce que** la fosse (2) a une longueur telle qu'elle peut recevoir plusieurs véhicules (4), et constitue ainsi un chemin dans lequel peuvent circuler le ou les véhicules, au moins une rampe (22) étant prévue pour permettre au(x) véhicule(s) de sortir de la fosse (2).

10. Equipement de montage selon la revendication 9, **caractérisé en ce qu'**il comprend des panneaux (21) positionnables en avant et/ou en arrière du véhicule (4), panneaux obturant partiellement la fosse (2).

11. Equipement de montage selon une des revendications 5 à 10, **caractérisé en ce qu'**il comprend des volets latéraux (9) permettant de fermer les intervalles (10) séparant le véhicule des rebords latéraux (2b) de la fosse (2).

12. Equipement de montage selon la revendication 11, **caractérisé en ce que** chaque volet latéral (9) comporte une lame pivotante (11b) solidaire d'une lame horizontale fixe (11a), lame pivotante pouvant venir en appui contre le véhicule (4).

## Claims

1. An assembly process for a vehicle (4) of substantial height, process in which at least one pit (2) is implemented that is able to accommodate the vehicle (4), **characterised in that** this latter is positioned on at least one removable floor platform (7a, 7b) able to raise the vehicle (4) with respect to the bottom (2a) of the pit (2), the floor platform being positioned at the required height by means of positioning means (8).

2. An assembly process according to Claim 1, **characterised in that** the vehicle is put into place in the pit and on its floor platforms using lifting means.

3. An assembly process according to Claim 2, **characterised in that** it incorporates at least one assembly operation that is performed on a vehicle (4) positioned upside down in a pit (2).

4. An assembly process according to Claim 1, **characterised in that** the vehicle (4) may advance through the pit (2) or on its floor platform (7a, 7b) using its own mobility means, at least one ramp (22) being provided to enable the vehicle (4) to be removed from the pit (2).

5. Assembly equipment for a vehicle that implements a process according to one of the above Claims, said equipment comprising at least one pit (2) able to accommodate the vehicle (4), **characterised in that** it pit inside which at least one floor platform (7a, 7b) is positioned able to raise the vehicle with respect to the pit bottom (2a), the floor platform being removable and position at the required height using positioning means (8).

6. Assembly equipment according to Claim 5, **characterised in that** it comprises at least two separate floor platforms (7a, 7b), each floor platform being put into place such as to receive part of the vehicle's (4) mobility means.

7. Assembly equipment according to one of Claims 5 or 6, **characterised in that** the floor platform (7a, 7b) and the positioning means (8) are constituted by a stack of stringers (28).

8. Assembly equipment according to one of Claims 5 to 7, **characterised in that** the pit (2) is of a length such that it is able to accommodate only one vehicle (4).

9. Assembly equipment according to one of Claims 5 to 7, **characterised in that** the pit (2) is of a length such that it is able to accommodate several vehicles (4), thereby constituting a pathway on which the vehicle(s) are able to circulate, at least one ramp (22) being provided to enable the vehicle(s) to exit the pit (2).

10. Assembly equipment according to Claim 9, **characterised in that** it incorporates panels (21) that may be positioned to the fore and/or the rear of the vehicle (4), such panels partly covering the pit (2).

11. Assembly equipment according to one of Claims 5 to 10, **characterised in that** it incorporates lateral shutters (9) enabling the gaps (10) between the vehicle and the lateral edges (2b) of the pit (2) to be closed off.

12. Assembly equipment according to Claim 11, **characterised in that** each lateral shutter (9) incorporates a pivoting slat (11b) integral with a fixed horizontal slat (11a), such pivoting slat being able to press on the vehicle (4).

## Patentansprüche

1. Verfahren zur Fertigung eines Fahrzeugs (4) mit einer sehr großen Höhe, wobei in dem Verfahren wenigstens eine Grube (2) eingesetzt wird, welche das Fahrzeug (4) aufnehmen kann, ***dadurch gekennzeichnet*, *dass*** dieses letztere auf wenigstens einer tragbaren Bühne (7a, 7b) angeordnet ist, die es ermöglicht, das Fahrzeug (4) in Bezug auf den Boden (2a) der Grube (2) anzuheben, wobei die Bühne mit Hilfe von Positionierungsmitteln (8) in einer gewünschten Höhe positioniert wird.

2. Verfahren zur Fertigung nach Anspruch 1, **dadurch gekennzeichnet, dass** das Fahrzeug mit Hilfe von Hebemitteln in der Grube und auf ihren Bühnen angeordnet wird.

3. Verfahren zur Fertigung nach Anspruch 2, **dadurch gekennzeichnet, dass** es wenigstens ein Fertigungsarbeitsschritt umfasst, der an einem umgekehrten Fahrzeug (4) in einer Grube (2) durchgeführt wird.

4. Verfahren zur Fertigung nach Anspruch 1, **dadurch gekennzeichnet, dass** das Fahrzeug (4) in der Grube (2) oder auf ihrer Bühne (7a, 7b) mit Hilfe seiner eigenen Bewegungsmittel vorrücken kann, wobei wenigstens eine Rampe (22) vorgesehen ist, um die Ausfahrt des Fahrzeugs (4) aus der Grube (2) zu ermöglichen.

5. Ausrüstung zur Fertigung eines Fahrzeugs, die das Verfahren nach einem der vorhergehenden Ansprüche einsetzt, wobei die Ausrüstung wenigstens eine Grube (2) umfasst, welche das Fahrzeug (4) aufnehmen kann, ***dadurch gekennzeichnet*, *dass*** im Inneren der Grube wenigstens eine Bühne (7a, 7b) angeordnet ist, die es ermöglicht, das Fahrzeug in Bezug auf den Boden (2a) der Grube (2) anzuheben, wobei die Bühne tragbar ist und mit Hilfe von Positionierungsmitteln (8) in einer gewünschten Höhe positioniert wird.

6. Ausrüstung zur Fertigung nach Anspruch 5, **dadurch gekennzeichnet, dass** sie wenigstens zwei verschiedene Bühnen (7a, 7b) umfasst, wobei jede Bühne derartig angeordnet ist, dass ein Teil der Bewegungsmittel des Fahrzeugs (4) aufgenommen wird.

7. Ausrüstung zur Fertigung nach einem der Ansprüche 5 oder 6, **dadurch gekennzeichnet, dass** die Bühne (7a, 7b) und die Positionierungsmittel (8) durch einen Stapel von Längsträgern (28) gebildet werden.

8. Ausrüstung zur Fertigung nach einem der Ansprüche 5 bis 7, **dadurch gekennzeichnet, dass** die Grube (2) eine derartige Länge aufweist, dass sie nur ein einziges Fahrzeug (4) aufnehmen kann.

9. Ausrüstung zur Fertigung nach einem der Ansprüche 5 bis 7, **dadurch gekennzeichnet, dass** die Grube (2) eine derartige Länge aufweist, dass sie mehrere Fahrzeuge (4) aufnehmen kann und so einen Weg bildet, auf dem das oder die Fahrzeuge fahren können, wobei wenigstens eine Rampe (22) vorgesehen ist, um dem oder den Fahrzeug(en) zu ermöglichen, die Grube (2) zu verlassen.

10. Ausrüstung zur Fertigung nach Anspruch 9, **dadurch gekennzeichnet, dass** sie Platten (21) umfasst, die vor und / oder hinter dem Fahrzeug (4) angeordnet werden können, wobei die Platten die Grube (2) teilweise verschließen.

11. Ausrüstung zur Fertigung nach einem der Ansprüche 5 bis 10, **dadurch gekennzeichnet, dass** sie seitliche Klappen (9) umfasst, um es zu ermöglichen, die Lücken (10) zwischen dem Fahrzeug und den seitlichen Rändern (2b) der Grube (2) zu schließen.

12. Ausrüstung zur Fertigung nach Anspruch 11, **dadurch gekennzeichnet, dass** jede seitliche Klappe (9) eine drehbare Tafel (11b) umfasst, die fest mit einer horizontalen, festen Tafel (11a) verbunden ist, wobei die drehbare Tafel sich gegen das Fahrzeug (4) abstützen kann.
